# EUROPEAN PATENT APPLICATION

(11) **EP 4 468 194 A1**
(43) Date of publication of application: **27.11.2024**
(21) Application number: 24177610.3
(22) Date of filing: 23.05.2024
(51) Int. Cl.: G06F 40/20

(54) **METHOD FOR GENERATING SUMMARY AND SYSTEM THEREOF**

(30) Priority: 24.05.2023 KR 20230067161
(71) Applicant: Samsung SDS Co., Ltd., Seoul 05510 (KR); Seoul National University R&DB Foundation, Seoul 08826 (KR)
(72) Inventor: Yoon, Sung Roh, Seoul 06276 (KR); Hwang, Bong Kyu, Seoul 05510 (KR); Yun, Jae Woong, Seoul 05510 (KR); Joe, Seong Ho, Seoul 05510 (KR); Song, Jong Yoon, Seoul 08814 (KR); Park, Noh Il, Gwacheon-si 13839 (KR); Gwon, Young June, Seoul 05510 (KR)
(74) Representative: Glawe, Delfs, Moll

(57) **Abstract**

A method for generating a summary performed by at least one computing device is provided. The method may include: acquiring a first sample pair, the first sample pair including an original text and a summary corresponding to the original text, extracting a common phrase that appears simultaneously in the original text and the summary of the first sample pair, selecting a first phrase among common phrases based on a prediction probability of a summary model for the common phrases, generating a second sample pair by modifying the first phrase in the original text and the summary of the first sample pair, and updating the summary model by performing a summary task using the second sample pair.

## Description

### BACKGROUND

### 1. Technical Field

The present disclosure relates to a method for generating a summary and a system thereof, and more particularly, to a method for generating a summary of an original text using an abstractive or generative summarization method, and a system thereof.

### 2. Description of the Related Art

Text summarization methods are largely divided into extractive summarization and abstractive summarization (or generative summarization). The extractive summarization method is a method of generating a summary by extracting keywords or key sentences from the original text, and the abstractive summarization method is a method of summarizing the original text by generating new keywords or sentences based on the core context of the original text. Naturally, the difficulty of the abstractive summarization method is known to be much higher than the extractive summarization method.

Meanwhile, as deep learning technology related to natural language processing rapidly develops, methods for generating a summary using deep learning models have recently been proposed. For example, the proposed methods build a deep learning model that generates a summary by performing likelihood-based learning on a sample pair consisting of the original text and the summary.

However, the proposed methods have a problem in that they do not guarantee the factual consistency of the summary with respect to the original text. That is, in the proposed methods, a problem occurs in which important information in the original text is distorted or information that is not in the original text appears in the summary as the deep learning model changes words (or sentences) representing key factual relationships in the original text or generates words (or sentences) that represent new factual relationships, and such a problem is recognized as a very serious problem due to the nature of a summary task that refines the important information in the original text.

In addition, the proposed methods also have a problem that the factual consistency of the summary greatly varies depending on the content of the original text. For example, when given an original text that contradicts the knowledge of the deep learning model, a problem in which a summary with very low factual consistency is generated occurs in the proposed methods.

### SUMMARY

Aspects of the present disclosure provide a method capable of generating a summary with high factual consistency using an abstractive or generative summarization method and a system for performing the method.

Aspects of the present disclosure also provide a method capable of solving a problem of factual consistency of a summary varying depending on the content of an original text (a method capable of improving the so-called factual adaptiveness of a summary model).

Aspects of the present disclosure also provide a method for generating original text-summary sample pairs that may effectively improve factual adaptiveness of a summary model.

Aspects of the present disclosure also provide a method capable of accurately evaluating a performance of a summary model with respect to factual adaptiveness.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

According to some exemplary embodiments of the present disclosure, a phrase that matches the knowledge of the summary model may be accurately selected among common phrases that simultaneously appear in the original text and the summary of an existing sample pair (i.e., a first sample pair) by using the prediction probability of the summary model. In addition, by modifying the phrase selected in this way, a virtual sample pair (i.e., a second sample pair) that contradicts the knowledge of the summary model may be accurately generated. Furthermore, by training the summary model using the generated sample pair, a summary model with excellent factual adaptiveness may be easily constructed. Since such a summary model may generate a high-quality summary with high factual consistency regardless of the content of the original text, the practical application of generative summarization method may be greatly accelerated.

In addition, by using the prediction probability of the summary model, a phrase that contradicts the knowledge of the summary model may be accurately selected as a replacement phrase. Accordingly, the virtual sample pair (i.e., the second sample pair) that is effective in improving the factual adaptiveness of the summary model may be more easily generated.

In addition, by selecting the replacement phrase among the phrases in a given training set, the virtual sample pair (i.e., the second sample pair) with similar characteristics (or distribution) to the existing sample pair (i.e., the first sample pair) may be easily generated.

In addition, a high-quality virtual sample pair (i.e., a second sample pair) with a natural context may be easily generated by replacing the corresponding phrase with another phrase of a same entity category when the phrase in the existing sample pair (i.e., the first sample pair) is an entity.

In addition, by further performing a contrastive learning task, the factual adaptiveness and factual consistency of the summary model may be improved together.

In addition, by using metrics that match well the concept of factual adaptiveness, the factual adaptiveness of the trained summary model may be accurately evaluated.

Effects according to the technical idea of the present disclosure are not limited to the effects mentioned above, and other effects that are not mentioned may be obviously understood by those skilled in the art from the following description.

According to some embodiments of the present disclosure, there is provided a method for generating a summary performed by at least one computing device. The method may include: acquiring a first sample pair, the first sample pair including an original text and a summary corresponding to the original text, extracting a common phrase that appears simultaneously in the original text and the summary of the first sample pair, selecting a first phrase among common phrases based on a prediction probability of a summary model for the common phrases, generating a second sample pair by modifying the first phrase in the original text and the summary of the first sample pair, and updating the summary model by performing a summary task using the second sample pair.

In some embodiments, the summary model may be a pretrained model.

In some embodiments, when the common phrase includes a plurality of tokens, the prediction probability for the common phrase may be obtained based on a prediction probability of the summary model for a first token among the plurality of tokens.

In some embodiments, selecting of the first phrase may include: extracting a text positioned before a specific common phrase from the summary of the first sample pair, obtaining a prediction probability for the specific common phrase by inputting the extracted text into the summary model without inputting the original text of the first sample pair into the summary model, and selecting the specific common phrase as the first phrase based on a determination that the obtained prediction probability is greater than or equal to a reference value.

In some embodiments, obtaining of the prediction probability for the specific common phrase may include inputting an empty text instead of the original text of the first sample pair.

In some embodiments, selecting of the first phrase may include: extracting a text positioned before a specific common phrase from the summary of the first sample pair, obtaining a first prediction probability for the specific common phrase by inputting the original text of the first sample pair and the extracted text into the summary model, replacing the specific common phrase with another phrase in the original text of the first sample pair and obtaining a second prediction probability of the summary model for the another phrase using the replaced original text, and selecting the specific common phrase as the first phrase based on a determination that a difference between the first prediction probability and the second prediction probability is greater than or equal to a reference value.

In some embodiments, the first phrase may be an entity, and the generating of the second sample pair may include replacing the first phrase with a second phrase belonging to a same entity category as the first phrase, the second phrase being different from the first phrase.

In some embodiments, the first sample pair may be selected from a plurality of sample pairs included in a previously prepared training set, and the second phrase may be selected from entities extracted from the plurality of sample pairs.

In some embodiments, replacing of the first phrase with the second phrase may include replacing a word in the first phrase with a word in the second phrase at a corresponding position, when both the first phrase and the second phrase include a plurality of words.

In some embodiments, generating of the second sample pair may include: extracting a text positioned before the first phrase from the summary of the first sample pair, obtaining a prediction probability for each of a plurality of predefined phrases by inputting the original text of the first sample pair and the extracted text into the summary model, selecting a second phrase different from the first phrase among the plurality of predefined phrases based on the obtained prediction probability, and replacing the first phrase with the second phrase.

In some embodiments, the second phrase may be selected among phrases whose obtained prediction probability is less than a reference value.

In some embodiments, the second phrase may be randomly selected from phrases whose obtained prediction probability is within a certain range.

In some embodiments, selecting of the second phrase may include selecting the second phrase among remaining phrases, excluding phrases with the prediction probability in the top K% (where K is a real number between 0 and 50) among the plurality of predefined phrases.

In some embodiments, the method may further include: acquiring a negative summary of an original text of a specific sample pair among the first sample pair and the second sample pair, the summary of the first sample pair and the summary of the second sample pair being positive summaries, and additionally updating the summary model by performing a contrastive learning task using the original text of the specific sample pair, a positive summary of the specific sample pair, and the negative summary.

In some embodiments, the specific sample pair may be the second sample pair, the second sample pair may be generated by replacing the first phrase with a second phrase different from the first phrase, and acquiring of the negative summary may include generating a negative summary of the second sample pair by replacing the first phrase included in the negative summary of the first sample pair with the second phrase.

In some embodiments, the specific sample pair may be the second sample pair, the second sample pair may be generated by replacing the first phrase with a second phrase different from the first phrase, and acquiring of the negative summary may include generating a negative summary of the second sample pair by replacing the first phrase in the summary of the first sample pair with a third phrase different from the second phrase.

In some embodiments, the specific sample pair may be the second sample pair, the positive summary of the first sample pair may include a first positive summary that is a reference summary and a second positive summary that is not the reference summary, and the positive summary of the second sample pair may include a summary generated by replacing the first phrase in the second positive summary with a second phrase that is different from the first phrase.

In some embodiments, the method may further include: acquiring a third sample pair, the third sample pair including an original text and a summary corresponding to the original text, generating a fourth sample pair by replacing a third phrase that appears simultaneously in the original text and the summary of the third sample pair with a fourth phrase, extracting a first text positioned before the third phrase from the summary of the third sample pair and extracting a second text positioned before the fourth phrase from a summary of the fourth sample pair, obtaining a prediction probability for the third phrase by inputting the original text of the third sample pair and the first text into the updated summary model, obtaining a prediction probability for the fourth phrase by inputting an original text of the fourth sample pair and the second text into the updated summary model, and evaluating a performance of the updated summary model based on a difference between the prediction probability for the third phrase and the prediction probability for the fourth phrase.

In some embodiments, the method may further include: acquiring a first original text, generating a second original text by modifying a phrase included in the first original text, generating a first summary for the first original text and generating a second summary for the second original text through the updated summary model, obtaining a first consistency score between the first original text and the first summary using a function that evaluates factual consistency between an original text and a summary, obtaining a second consistency score between the second original text and the second summary using the function, and evaluating a performance of the updated summary model based on a difference between the first consistency score and the second consistency score.

According to another aspect of the present disclosure, there is a system for generating a summary. The system may include: one or more processors, and a memory configured to store a computer program executed by the one or more processors, wherein the computer program includes instructions that cause to be performed: an operation of acquiring a first sample pair, the first sample pair including an original text and a summary corresponding to the original text, an operation of extracting a common phrase that appears simultaneously in the original text and the summary of the first sample pair, an operation of selecting a first phrase among common phrases based on a prediction probability of a summary model for the common phrases, an operation of generating a second sample pair by modifying the first phrase in the original text and the summary of the first sample pair, and an operation of updating the summary model by performing a summary task using the second sample pair.

### BRIEF DESCRIPTION OF THE DRAWINGS

The above and other aspects and features of the present disclosure will become more apparent by describing in detail exemplary embodiments thereof with reference to the attached drawings, in which:
FIG. 1 is an exemplary diagram for schematically describing an operation of a system for generating a summary according to some exemplary embodiments of the present disclosure;
FIG. 2 is an exemplary diagram for describing the concept of factual adaptiveness presented in some exemplary embodiments of the present disclosure;
FIGS. 3 and 4 are exemplary diagrams for describing the structure and operation of a summary model according to some exemplary embodiments of the present disclosure;
FIG. 5 is an exemplary flowchart schematically illustrating a method for generating a summary according to some exemplary embodiments of the present disclosure;
FIG. 6 is an exemplary flowchart illustrating the detailed processes of a training set augmentation step illustrated in FIG. 5;
FIG. 7 is an exemplary flowchart illustrating a method for selecting a phrase according to some exemplary embodiments of the present disclosure;
FIG. 8 is an exemplary flowchart illustrating a method for selecting a phrase according to some other exemplary embodiments of the present disclosure;
FIG. 9 is an exemplary flowchart illustrating a method for generating an entity pool according to some exemplary embodiments of the present disclosure;
FIG. 10 is an exemplary diagram for describing a method for selecting a replacement phrase according to some exemplary embodiments of the present disclosure;
FIG. 11 is an exemplary diagram for describing a method for replacing a phrase according to some exemplary embodiments of the present disclosure;
FIG. 12 is an exemplary diagram for describing a case in which a plurality of virtual sample pairs are generated from one sample pair according to some exemplary embodiments of the present disclosure;
FIG. 13 is an exemplary flowchart illustrating a method for generating a summary according to some other exemplary embodiments of the present disclosure;
FIG. 14 is an exemplary diagram for describing a method for generating a negative summary according to some exemplary embodiments of the present disclosure;
FIG. 15 is an exemplary diagram for describing a method for generating a negative summary according to some other exemplary embodiments of the present disclosure;
FIG. 16 is an exemplary diagram for further describing a contrastive learning task of the summary model training step illustrated in FIG. 13;
FIG. 17 is an exemplary diagram for describing a method for evaluating factual adaptiveness of a summary model according to some exemplary embodiments of the present disclosure;
FIG. 18 is an exemplary diagram for describing a method for evaluating factual adaptiveness of a summary model according to some other exemplary embodiments of the present disclosure; and
FIG. 19 illustrates an exemplary computing device capable of implementing the system for generating the summary according to some exemplary embodiments of the present disclosure.

### DETAILED DESCRIPTION OF THE EMBODIMENTS

Hereinafter, example embodiments of the present disclosure will be described with reference to the attached drawings. Advantages and features of the present disclosure and methods of accomplishing the same may be understood more readily by reference to the following detailed description of example embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims.

In adding reference numerals to the components of each drawing, it should be noted that the same reference numerals are assigned to the same components as much as possible even though they are shown in different drawings. In addition, in describing the present disclosure, when it is determined that the detailed description of the related well-known configuration or function may obscure the gist of the present disclosure, the detailed description thereof will be omitted.

Unless otherwise defined, all terms used in the present specification (including technical and scientific terms) may be used in a sense that may be commonly understood by those skilled in the art. In addition, the terms defined in the commonly used dictionaries are not ideally or excessively interpreted unless they are specifically defined clearly. The terminology used herein is for the purpose of describing particular embodiments only and is not intended to be limiting of the disclosure. In this specification, the singular also includes the plural unless specifically stated otherwise in the phrase.

In addition, in describing the component of this disclosure, terms, such as first, second, A, B, (a), (b), may be used. These terms are only for distinguishing the components from other components, and the nature or order of the components is not limited by the terms. If a component is described as being "connected," "coupled" or "contacted" to another component, that component may be directly connected to or contacted with that other component, but it should be understood that another component also may be "connected," "coupled" or "contacted" between each component.

Hereinafter, various exemplary embodiments of the present disclosure will be described in detail with reference to the accompanying drawings.

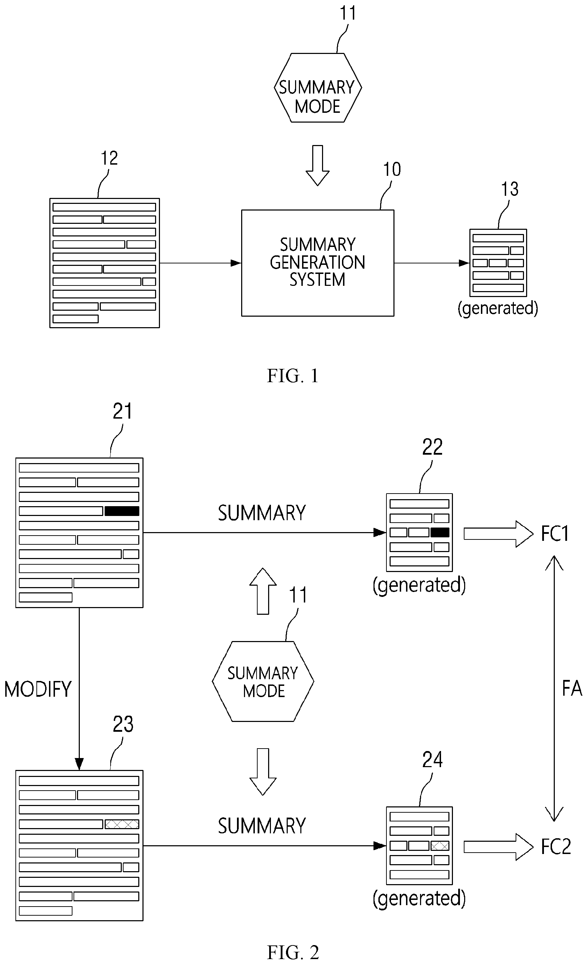

FIG. 1 is an exemplary diagram for schematically describing an operation of a summary generation system 10 according to some exemplary embodiments of the present disclosure.

As illustrated in FIG. 1, the summary generation system 10 is a computing device/system that may generate a summary 13 for an original text 12 (e.g., document) using a generative (or abstractive) summarization method through a deep learning-based summary model 11. Hereinafter, for convenience of explanation, the summary generation system 10 will be abbreviated as "summary system 10".

For reference, the original text (e.g., 12) may in some cases be named as "original text", "document", "main text", etc., and the summary (e.g., 13) may be named as "summary text", "summary", "abstract", etc. In addition, since the original text and summary used for training and evaluation of the summary model 11 each correspond to a sample, a pair of the original text and summary may be named a "sample pair". The "sample" may be used interchangeably with terms such as example, instance, observation, and individual data in the technical field.

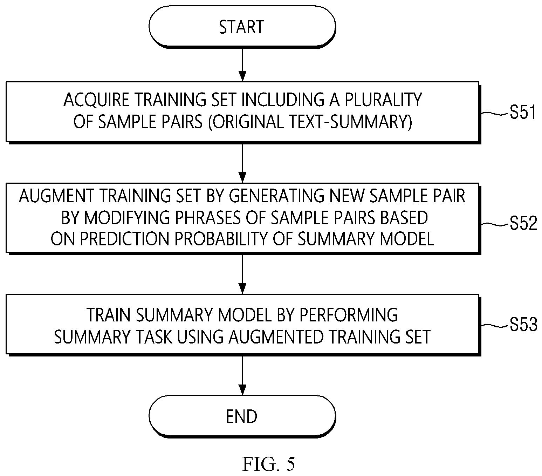

Specifically, the summary system 10 may train the summary model 11 (e.g., perform likelihood-based learning) by performing a summarization task using a number of sample pairs (i.e., training set) consisting of the original text and the summary (e.g., a positive summary used as a correct answer/reference summary). In this case, in order to improve factual adaptiveness of the summary model 11, the summary system 10 may generate new (virtual) sample pairs and use the new (virtual) sample pairs together to train the summary model 11. This will be described in detail with reference to the drawings in FIG. 5 and below.

The factual adaptiveness is a performance concept (measure) of the summary model (e.g., 11) newly designed by the inventors of the present disclosure, and may refer to the degree to which the summary model (e.g., 11) is capable of generating a summary while maintaining factual consistency for original texts with different content (i.e., factual relationships). In a more strict sense, the factual adaptiveness may refer to the degree to which the summary model (e.g., 11) is capable of generating a summary while maintaining factual consistency for the original text that contradicts its own knowledge (i.e., knowledge obtained through training).

In addition, the factual consistency may refer to the degree to which the content of the summary is consistent with the original text. Since those skilled in the art will already be familiar with the concept of factual consistency, a description thereof will be omitted, and the concept of factual adaptiveness will be further described with reference to FIG. 2.

As illustrated in FIG. 2, it is assumed that the summary model 11 generates summaries 22 and 24 for different original texts 21 and 23, respectively. In addition, it is assumed that a first original text 21 is a text that matches the knowledge of the summary model 11, and a second original text 23 is a text that is modified to contradict the knowledge of the summary model 11. In this case, the smaller the difference between a factual consistency score FC1 for the first original text 21 and a first summary sentence 22 and a factual consistency score FC2 for the second original text 23 and a second summary sentence 24, the factual adaptiveness FA of the summary model 11 may be evaluated (expressed) as better.

The description will be made with reference to FIG. 1 again.

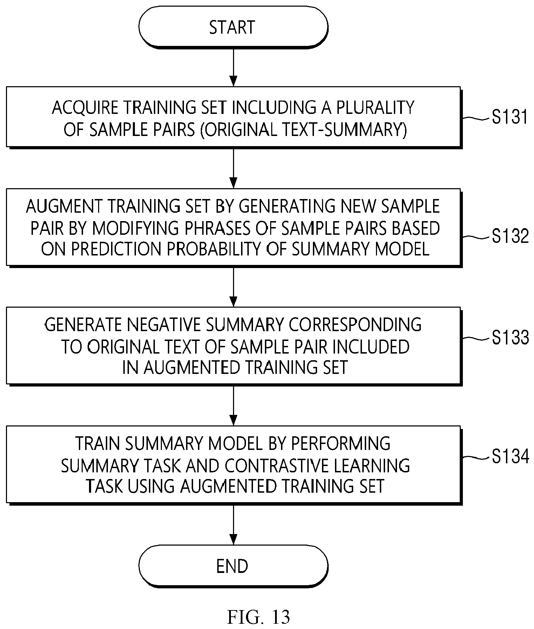

The summary system 10 may generate a negative summary of the original text and may further perform a contrastive learning task using the original text, the positive summary, and the negative summary. In this way, the factual consistency of the summary model 11 can be further improved. This will be described in detail later with reference to FIGS. 13 to 18.

For reference, the positive summary may refer to a summary with higher factual consistency with the original text than the negative summary, and the negative summary may refer to a summary with lower factual consistency with the original text than the positive summary. In the description below, a sample pair consisting of the original text and the positive summary may be referred to as a "positive sample pair", and a sample pair consisting of the original text and the negative summary may be named a "negative sample pair".

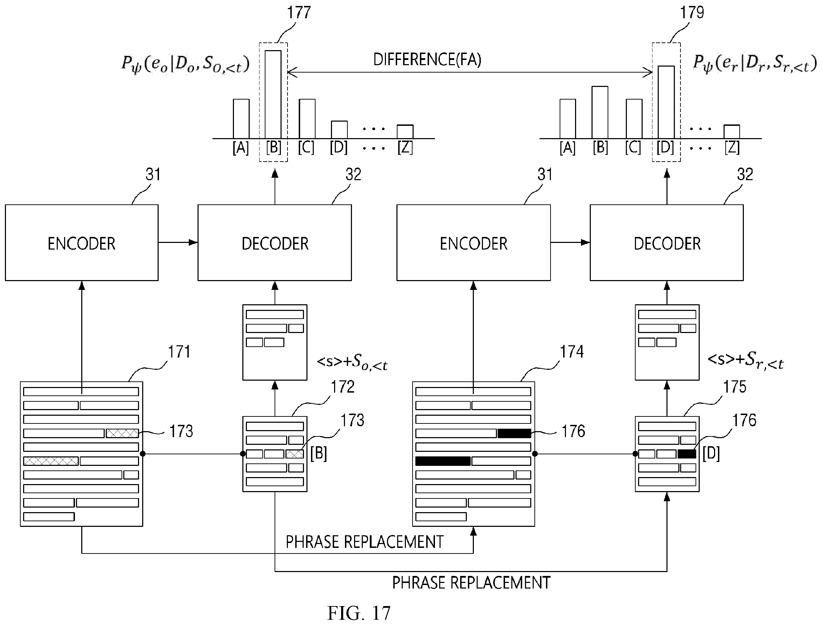

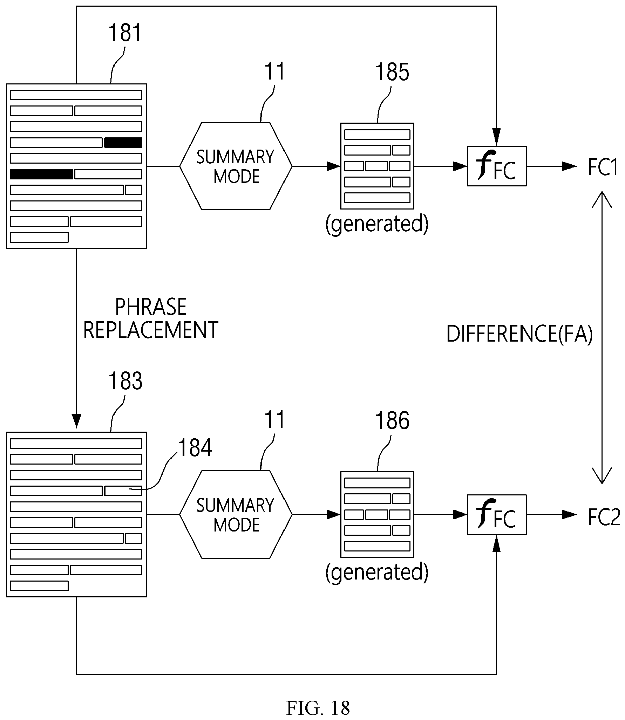

In addition, the summary system 10 may evaluate the factual adaptiveness of the trained summary model 11 using a predetermined metric. To avoid redundant description, this will be described later with reference to FIGS. 17 and 18.

In addition, the summary system 10 may generate a summary 13 for an original text 12 for inference for which the correct answer (i.e., the correct answer/reference summary) is not given by using the trained summary model 11. In some cases, the summary system 10 may provide the trained summary model 11 to a separate task performing device (not illustrated). In this case, the generation of the summary 13 may be performed by the task performing device (not illustrated).

In some exemplary embodiments, the summary system 10 may provide a summary service to multiple users. For example, when the summary system 10 receives a summary request with specific text (original text) from a user (or user terminal), the summary system 10 may generate and provide a summary of the received text (original text) in response to the received summary request. In the present exemplary embodiments, the summary system 10 may provide the summary service through a web interface, but the scope of the present disclosure is not limited thereto.

The summary system 10 described above may be implemented with at least one computing device. For example, all functions of the summary system 10 may also be implemented in one computing device, a first function of the summary system 10 may also be implemented in a first computing device, and a second function thereof may also be implemented in a second computing device. Alternatively, a specific function of the summary system 10 may also be implemented in a plurality of computing devices.

The computing device may include any device having a computing function, and reference for an example of such a device is made to FIG. 20.

For reference, since the computing device is an aggregate in which various components (e.g., a memory, a processor, etc.) interact, the computing device may also be named a "computing system" in some cases. In addition, the term computing system may also include the concept of an aggregate in which a plurality of computing devices interact.

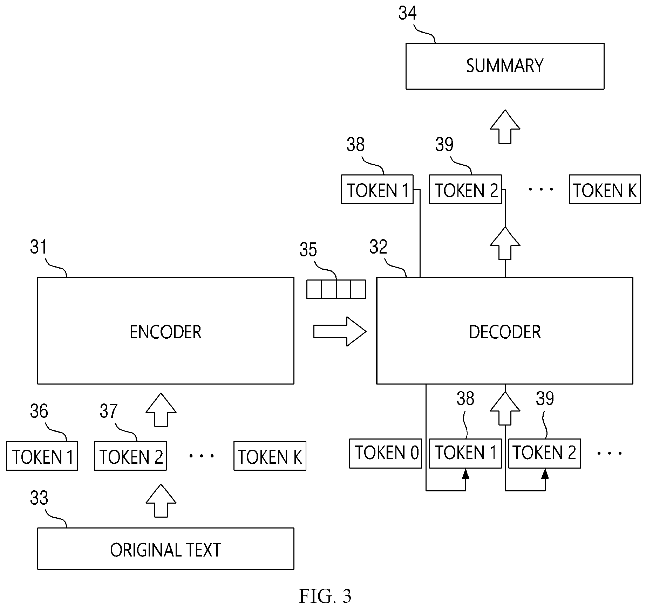

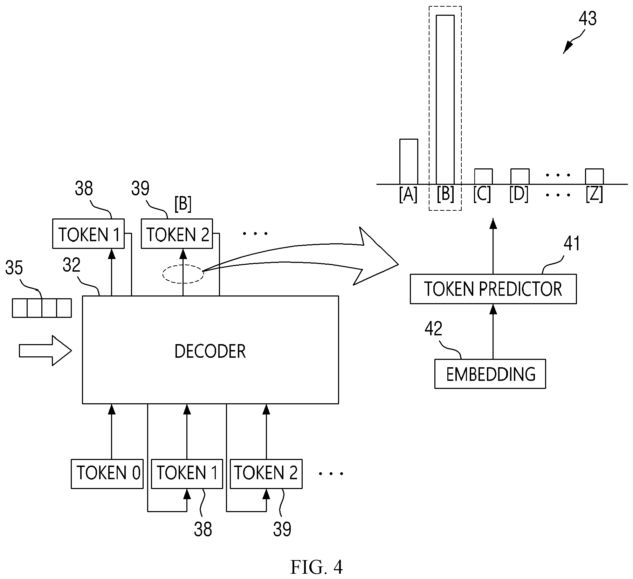

The above has schematically described the operation of the summary system 10 according to some exemplary embodiments of the present disclosure with reference to FIGS. 1 and 2. Hereinafter, prior to describing various methods performed in the summary system 10, an exemplary structure and operation method of the summary model 11 will first be described with reference to FIGS. 3 and 4 in order to provide more convenience of understanding.

FIG. 3 is a diagram illustrating the structure and operation of the summary model 11 according to some exemplary embodiments of the present disclosure.

As illustrated in FIG. 3, the summary model 11 according to exemplary embodiments is a deep learning model configured to receive an original text 33 and generate (output) a summary 34, and may be configured to include an encoder 31 and a decoder 32.

The encoder 31 may refer to a module that encodes the original text 33. For example, as illustrated, the encoder 31 may receive a sequence of a plurality of tokens (e.g., 36 and 37) constituting the original text 33 and generate an embedding 35 for the original text 33 through appropriate encoding (neural network) operation. In this case, each token may be input to the encoder 31 in the form of a one-hot vector or may be input to the encoder 31 in another form. In the former case, the encoder 31 may be configured to further include an embedding layer (e.g., multi-layer perceptron) that converts the one-hot vector of each token into an embedding vector.

For example, the original text embedding 35 may be a context embedding (e.g., context vector) in which all information of the original text 33 is implied, and may be an embedding of token (or sentence) unit, which may be modified to any extent depending on a model design method.

The encoder 31 may be implemented based on a neural network. For example, the encoder 31 may be implemented as a Recurrent Neural Network (RNN)-based neural network, and may be implemented as an attention-based neural network (e.g., transformer encoder). However, the scope of the present disclosure is not limited thereto.

Next, the decoder 32 may refer to a module that decodes the original text embedding 35 in an auto-regressive manner and outputs (generates) the summary 34. For example, as illustrated, the decoder 32 may generate the summary 34 by repeatedly performing decoding steps (operations) in the auto-regressive manner. That is, the decoder 32 may output (predict) a decoding result (e.g., token 39) of a current step by decoding an output (e.g., token 38) of a previous step and the original text embedding 35 together (e.g., a t-th token of the summary is an output of a t-th decoding step). In addition, the decoder 32 may repeat such a process until a token indicating the end of the summary 34 is output.

However, in the training step of the summary model 11, a teacher-forcing technique may be used for rapid training. In this case, tokens of the correct answer (reference) summary may be input to the decoder 32 in batches. Since those skilled in the art will already be familiar with the auto-regressive manner and the teacher-forcing technique, a detailed description thereof will be omitted.

For reference, in drawings such as FIG. 3, "token 0" may mean a special token indicating the start of the summary (or sentence). However, the scope of the present disclosure is not limited thereto.

In order to provide more convenience of understanding, the operation of the decoder 32 will be further described with reference to FIG. 4.

As illustrated in FIG. 4, in the second decoding step, the decoder 32 may decode the original text embedding 35 and the output 38 of the first decoding step to generate an embedding 42 corresponding to a second token of the summary 34. Then, a token predictor 42 may calculate a prediction probability 43 (i.e., confidence score) for a plurality of tokens predefined in a dictionary based on the corresponding embedding 42, and a token (e.g., token B) with the highest confidence score may be output as a result of the second decoding step. FIG. 4 assumes that the decoding result is determined in a "greedy method".

The token predictor 42 may refer to a module (or layer) positioned at the end of the decoder 32, but is not limited thereto. The token predictor 42 may be implemented based on a neural network, for example, a fully connected layer.

For reference, in the drawings of FIG. 4 and below, a square bracket ("[]") means a token. For example, "[A]" illustrated in FIG. 4 may be understood as meaning "token A" and "[Z]" as meaning "token Z".

The decoder 32 may also be implemented based on a neural network. For example, the decoder 32 may be implemented as a RNN-based neural network, and may be implemented as an attention-based neural network (e.g., transformer decoder). However, the scope of the present disclosure is not limited thereto.

The above has schematically described the structure and operation of the summary model 11 according to some exemplary embodiments of the present disclosure with reference to FIGS. 3 and 4. Hereinafter, various methods that may be performed in the above-described summary system 10 will be described in detail with reference to FIG. 5 and below. Hereinafter, for clarity of the present disclosure, reference numbers for the summary model 11, etc. may be omitted when the drawings are not directly referred to.

Hereinafter, to provide convenience of understanding, description will be continued on the assumption that all steps/operations of the methods to be described later are performed in the above-described summary system 10. Therefore, when a subject of a specific step/operation is omitted, it may be understood that the specific step/operation is performed in the summary system 10. However, in a real environment, some steps/operations of the methods to be described later may also be performed in other computing devices. In addition, hereinafter, the description will be continued assuming that the summary model 11 is configured as illustrated in FIG. 3.

FIG. 5 is an exemplary flowchart schematically illustrating a method for generating a summary according to some exemplary embodiments of the present disclosure. However, this is only a preferred exemplary embodiment for achieving the object of the present disclosure, and some steps may also be added or deleted as needed.

As illustrated in FIG. 5, the present exemplary embodiments may begin at step S51 of acquiring a training set including a plurality of sample pairs. Here, the sample pair may consist of an original text and a corresponding reference summary, and the reference summary may mean a positive summary.

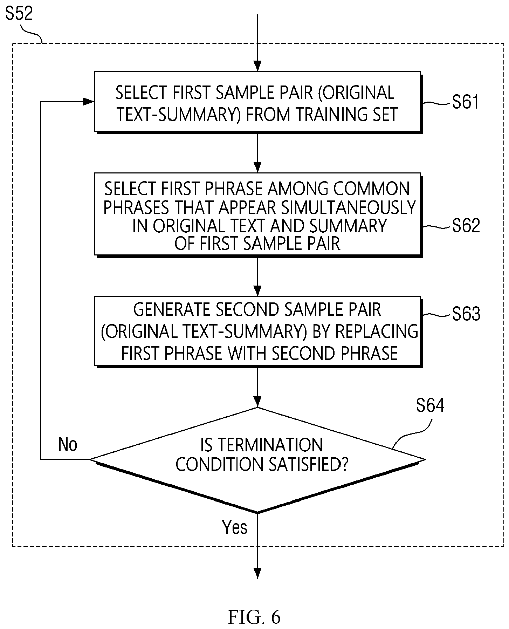

In step S52, new (virtual) sample pairs may be generated by modifying phrases of the sample pairs based on a prediction probability of a summary model. As a result, the training set may be augmented. The present step may be understood as a process (i.e., data augmentation process) of generating sample pairs (e.g., an original text and a positive summary that contradict the knowledge of the summary model) that are effective in improving factual adaptiveness using the knowledge of the summary model, and the prediction probability of the summary model may be understood to mean the knowledge of the summary model. The detailed process of the present step will be described in detail later with reference to FIGS. 6 to 12.

Since the summary model is a model that possesses knowledge, it may refer to a model in which training is partially performed. For example, a model (e.g., a language model) pretrained using a text set may be used as the summary model. However, the scope of the present disclosure is not limited thereto. For reference, a task for pre-training does not have to be a summary task.

In step S53, the summary model may be trained by performing the summary task using the augmented training set. For example, the summary system 10 may perform likelihood-based learning on the summary model 11 using the sample pairs (i.e., the positive sample pairs) of the augmented training set. As a more specific example, the summary system 10 may update weight parameters of the summary model 11 based on a cross entropy loss between an output (i.e., prediction probability for each token) of the decoding step of the summary model 11 and a correct answer token of the reference summary. As such a process is repeated for other sample pairs, the summary model 11 may be equipped with generative summary ability and the factual adaptiveness may also be improved. If a negative sample pair exists, the summary system 10 may further perform unlikelihood-based learning.

Meanwhile, although not illustrated in FIG. 5, after the above-described training step S53, a step of evaluating a performance of the trained summary model or generating a summary of an original text for inference may be further performed. For example, the summary system 10 may evaluate the factual adaptiveness of the summary model 11, and may generate a summary by inputting the original text for inference into the summary model 11 and performing decoding in an auto-regressive manner. A specific method for evaluating the factual adaptiveness of the summary model 11 will be described later with reference to FIGS. 17 and 18.

Hereinafter, the detailed processes of the training set augmentation step S52 will be described with reference to FIGS. 6 to 12.

FIG. 6 is an exemplary flowchart illustrating the detailed processes of the training set augmentation step S52 according to some exemplary embodiments of the present disclosure. However, this is only a preferred exemplary embodiment for achieving the object of the present disclosure, and some steps may also be added or deleted as needed. In FIG. 6, for clarity of description, a sample pair of the training set is illustrated as a "first sample pair" and a newly generated virtual sample pair is illustrated as a "second sample pair".

In step S61, a first sample pair (original text-summary) may be selected from the training set. Any method may be used to select the first sample pair.

In step S62, a first phrase may be selected from common phrases that appear simultaneously in the original text and summary of the first sample pair. The common phrase may be, for example, an entity (e.g., an entity recognized through a named entity recognition technique), but the scope of the present disclosure is not limited thereto. For example, the common phrase may not correspond to the entity or may be words (e.g., verbs, adjectives, etc.) that describe a relation between entities. The common phrase may consist of one or multiple tokens (or words).

Specifically, the summary system 10 may select a common phrase that matches the knowledge of the summary model 11 as the first phrase using a prediction probability of the summary model 11 for the common phrase. It may be understood that the reason for selecting such common phrase is that the original text that contradicts the knowledge of the summary model 11 (i.e., a sample effective in improving the factual adaptiveness of the summary model 11) may be easily generated only when the phrase that matches the knowledge of the summary model 11 is modified. However, the specific method of selecting the first phrase may vary depending on the exemplary embodiment.

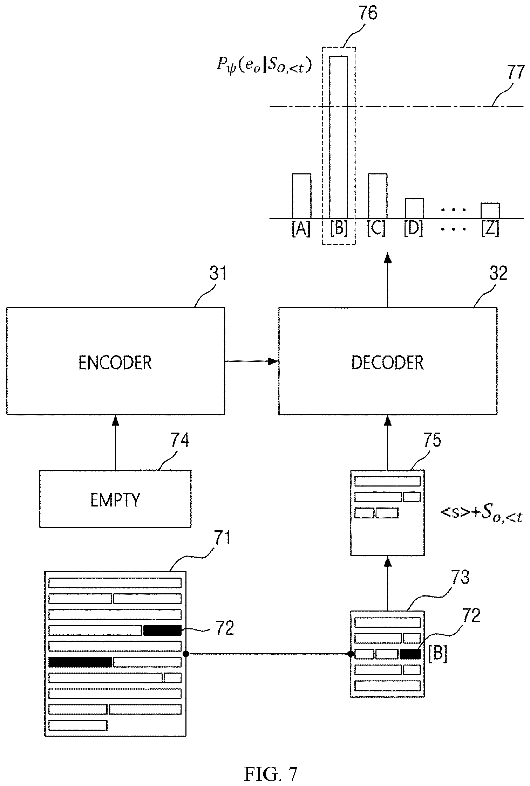

In some exemplary embodiments, in a state in which the original text of the first sample pair is not provided, a prediction probability of the summary model for the common phrase (i.e., a prediction probability of the common phrase from the prediction probability for each token) may be calculated. In addition, a common phrase whose calculated prediction probability is greater than or equal to a reference value may be selected as the first phrase. For example, as illustrated in FIG. 7, assume that a phrase (see 72) appears simultaneously in an original text 71 and a summary 73 of the first sample pair. In this case, the common phrase 72 may consist of only a token "B", and a first token of the common phrase 72 may correspond to "B". In this case, the summary system 10 may extract a text 75 positioned before the common phrase 72 in the summary 73. Next, the summary system 10 may calculate a prediction probability 76 for the common phrase 72 (e.g., a prediction probability for the first token "B") by inputting the text 75 into the decoder 32 without inputting the original text 71 into the encoder 31 of the summary model 11. FIG. 7 illustrates as an example a case in which an empty text 74 (e.g., a text including only punctuation marks) is input to the encoder 31 instead of the original text 71, but the scope of the present disclosure is not limited thereto. Next, the summary system 10 may select the common phrase 72 as the first phrase based on the determination that the prediction probability 76 for the common phrase 72 is greater than or equal to a reference value 77. This is because the fact that a prediction probability of a specific common phrase is calculated to be high in a state in which the original text is not given means that the common phrase strongly matches the knowledge of the summary model 11.

For reference, in the description of FIG. 7, when the first token 72 of the common phrase is a "t"-th token of the summary 73, the calculating of the prediction probability for the common phrase 72 by inputting the text 75 into the decoder 32 may be understood as calculating a prediction probability for the "t"-th token by inputting tokens up to a "t-1"-th of the summary 73 into the decoder 32 (refer to the teacher-forcing technique). In addition, in FIG. 7, "<s>" in a notation ("<s>+S_{0,0<t}") meaning the extracted text 75 refers to a special token indicating the start, and "S_{0,0<t}" refers to tokens positioned before the t-th token in "S₀", which is the summary 73 of the first sample pair. In addition, "Ψ" in a notation ("P_{Ψ}(e₀|S₀,_{<t})") meaning the prediction probability 76 refers to the summary model 11, and "e₀" refers to a phrase (i.e., a common phrase) starting with the t-th token of the summary 73. In the drawings below FIG. 7, the notations similar to those in FIG. 7 are used.

Hereinafter, to provide convenience of understanding, unless otherwise stated, the description will be continued assuming that the common phrase consists of one token.

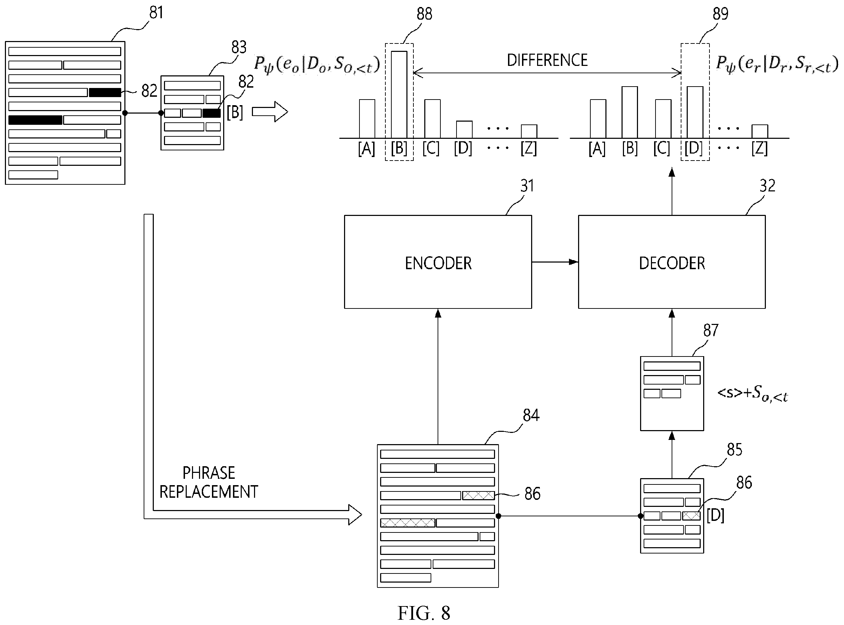

In other some exemplary embodiments, a first prediction probability of the summary model for the common phrase may be calculated and a second prediction probability (i.e., a prediction probability for the replaced phrase) may be calculated by replacing the common phrase with another phrase. In addition, based on a determination that a difference between the two prediction probabilities is greater than or equal to the reference value, the corresponding common phrase may be selected as the first phrase. In this case, the replaced phrase may function as the second phrase illustrated in FIG. 6 (that is, in the present exemplary embodiment, a second sample pair of step S63 may be generated at the same time the first phrase is selected). In order to provide more convenience of understanding, a further description will be made with reference to FIG. 8.

As illustrated in FIG. 8, the summary system 10 may calculate a first prediction probability 88 for a common phrase 82 (see "B") in a state in which an original text 81 of the first sample pair is input to the encoder 31 of the summary model 11. Since the first prediction probability 88 is calculated in the same way as a second prediction probability 89, the method of calculating the first prediction probability 88 is described with additional reference to the description below.

Next, the summary system 10 may generate second sample pairs 84 and 85 by replacing the common phrase 82 with another phrase 86 (see "D"), and may calculate a second prediction probability 89 of the summary model 11 for the corresponding phrase 86. Specifically, the summary system 10 may extract a text 87 positioned before the corresponding phrase 86 in the summary 87 of the second sample pair. In addition, the summary system 10 may calculate the prediction probability 89 for the phrase 86 by inputting the extracted text 87 into the decoder 32 in a state in which the original text 84 of the second sample pair is input to the encoder 31.

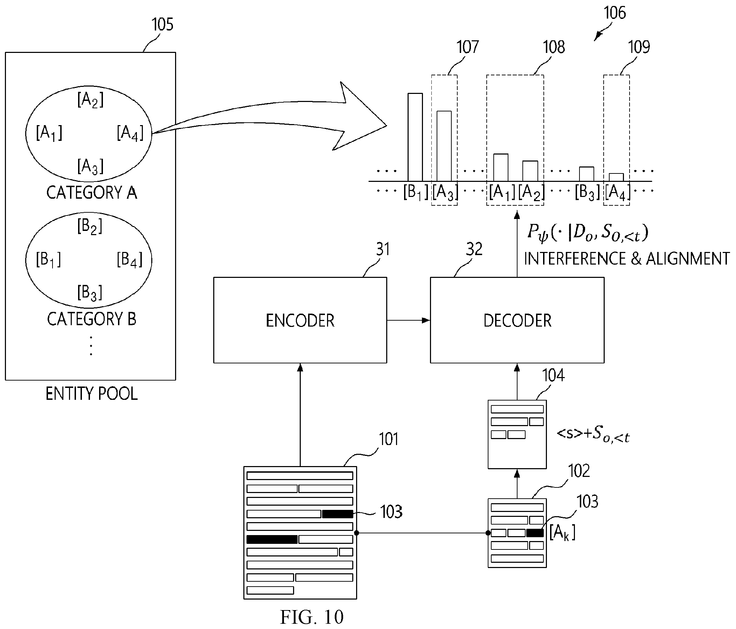

Next, the summary system 10 may select the common phrase 82 as the first phrase based on a determination that a difference between the two prediction probabilities 88 and 89 is greater than or equal to a reference value. This is because the large difference between the two prediction probabilities 88 and 89 means that the second sample pair 84 is an effective sample pair for factual adaptiveness learning (e.g., this means that the common phrase 82 matches well with the knowledge of the summary model 11 or the replaced phrase 86 is a phrase that contradicts the knowledge of the summary model 11). As mentioned above, the replaced phrase 86 may be automatically selected as the second phrase. The replaced phrase 86 may be selected, for example, according to a method illustrated in FIG. 10, which will be described later.

For reference, "Dᵣ" and "Sᵣ" in FIG. 8 refer to the original text 84 and the summary 85 of the second sample pair, respectively, and "eᵣ" refers to the replaced phrase. In the drawings below FIG. 8, the notations similar to those in FIG. 8 are used.

In some still other exemplary embodiments, the first phrase may also be selected based on various combinations of the above-described exemplary embodiments. For example, the summary system 10 may also select as the first phrase a common phrase that satisfies both a condition that the first prediction probability calculated in the method illustrated in FIG. 7 is greater than or equal to a first reference value and a condition that the second prediction probability calculated in the method illustrated in FIG. 8 is less than a second reference value.

The description will be made with reference to FIG. 6 again.

In step S63, a new sample pair (i.e., a second sample pair) may be generated by replacing the first phrase with a second phrase (i.e., a phrase different from the first phrase) in the original text and summary of the first sample pair. Since the same phrase replacement occurred in the original text and the summary, the second sample pair may also be understood as the positive sample pair (that is, the summary of the second sample pair is also the positive summary).

For example, if the first phrase is an entity, the summary system 10 may generate the second sample pair by selecting a second phrase (i.e., an entity) from entities belonging to the same entity category as the first phrase and replacing the first phrase with the second phrase. In this case, a high-quality sample pair with natural context may be easily generated.

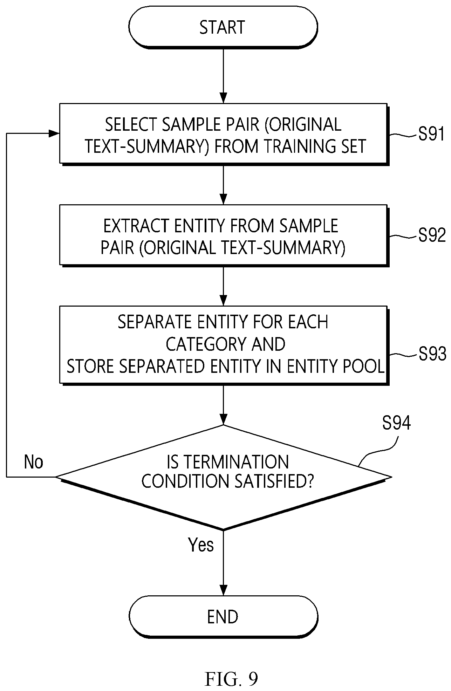

In some exemplary embodiments, the summary system 10 may extract entities from the training set to which the first sample pair belongs, generate (build) an entity pool, and select the second phrase from the entity pool. For example, as illustrated in FIG. 9, the summary system 10 may generate the entity pool by extracting entities from sample pairs included in the training set until a termination condition is satisfied and dividing and storing the extracted entities for each category (e.g., a predefined category such as people, places, etc.) (S91 to S94). The summary system 10 will be able to extract entities and distinguish entity categories using a deep learning-based named entity recognition technique, but the scope of the present disclosure is not limited thereto. The termination condition of step S94 may be defined in any way. For example, the termination condition may be defined as when the next sample pair (i.e., unselected sample pair) does not exist in the training set, when more than a preset number of entities are extracted, when a preset time elapses, etc. If the entity pool is generated, the summary system 10 may generate a second sample pair by selecting a second phrase that belongs to the same entity category as the first phrase from the entity pool and replacing the first phrase with the second phrase. In this case, it is possible to prevent in advance the generation of a sample pair with different characteristics (or distribution) from the sample pairs (e.g., the first sample pair) of the training set. That is, according to the present exemplary embodiments, high-quality sample pairs that are effective for training the summary model 11 may be easily generated.

The technical ideas of the above-described exemplary embodiments may be extended to the scope of general phrases. For example, the summary system 10 may generate a phrase pool by dividing and storing the phrases extracted from the training set according to a predetermined category (e.g., a part-of-speech category, an entity category in the case of nouns (entities), etc.), and may generate a second sample pair by replacing the first phrase with the second phrase belonging to the same category.

Meanwhile, in some exemplary embodiments, the second phrase may also be selected based on the prediction probability of the summary model. That is, the knowledge of the summary model may be used even during the process of selecting the second phrase. Hereinafter, the present exemplary embodiments will be further described with reference to FIG. 10.

FIG. 10 is an exemplary diagram for describing a method for selecting a replacement phrase (i.e., a second phrase) according to some exemplary embodiments of the present disclosure. FIG. 10 assumes that the first phrase 103 (A_{K}) is an entity belonging to an "A" category and the second phrase is selected from a pre-generated entity pool (or phrase pool).

As illustrated in FIG. 10, the summary system 10 may calculate a prediction probability for each phrase corresponding to a position of a first phrase 103 using an original text 101 and a summary 102 of a first sample pair. That is, the summary system 10 may calculate a prediction probability 106 for a plurality of predefined phrases by inputting the original text 101 into the encoder 31 of the summary model 11 and inputting a text 104 positioned before the first phrase 103 in the summary 103 into the decoder 32. In addition, the summary system 10 may align the phrases based on probability values. Here, the prediction probability 106 for the phrase (entity) may refer to, for example, a prediction probability for a first token.

Next, the summary system 10 may designate phrases (e.g., A₁, A₂, etc.) belonging to the same entity category as the first phrase 103 in the entity pool 105 as candidate phrases, and may group the candidate phrases based on prediction probabilities of the candidate phrases. FIG. 10 illustrates as an example a case in which the candidate phrases are grouped into a first phrase group 107 with a relatively high prediction probability, a second phrase group 108 with a medium prediction probability, and a third phrase group 109 with a relatively low prediction probability, but the scope of the present disclosure is not limited thereto.

For reference, the reason for grouping based on the prediction probability may be understood as generating various sample pairs with different degrees of contradiction to the knowledge of the summary model 11 (e.g., in the third phrase group 109, a sample pair with a strong degree of contradiction to the knowledge of the summary model 11 may be generated, and in the second phrase group 108, a sample pair with a relatively less strong degree of contradiction to the knowledge of the summary model 11 may be generated).

Next, the summary system 10 may select a second phrase from the phrase groups 107 to 109. However, the specific method of selecting the second phrase may be designed in various ways.

As an example, the summary system 10 may select the second phrase by performing random sampling from a specific phrase group (e.g., 109). The summary system 10 may also select a plurality of phrases by performing random sampling from the plurality of phrase groups 107 to 109.

As another example, the summary system 10 may select a second phrase among phrases whose prediction probability is less than a reference value. For example, the summary system 10 may select the second phrase from the third phrase group 109 with the lowest prediction probability. This is because the phrase with the low prediction probability is likely to be a phrase that contracts the knowledge of the summary model 11.

As still another example, the summary system 10 may select the second phrase among the remaining phrases excluding phrases with the prediction probability in the top K% (where, K is a real number between 0 and 10, 0 and 20, 0 and 30, 0 and 40, or 0 and 50) among the plurality of phrases. For example, the summary system 10 may form the first phrase group 107 using the remaining tokens excluding phrases with the prediction probability in the top K% among phrases with a prediction probability greater than or equal to the reference value. In addition, the summary system 10 may select the second phrase from the first phrase group 107. The reason for excluding the phrases with the prediction probability in the top K% is that there is a possibility that a phrase with a very high prediction probability is semantically identical or similar to the first phrase, and that once such a phrase (i.e., semantically identical/similar phrase) is selected, the meaning of phrase replacement disappears.

As still another example, the summary system 10 may also select the second phrase based on various combinations of the examples described above. For example, the summary system 10 may also select the plurality of phrases according to the examples described above.

The description will be made with reference to FIG. 6 again.

In step S64, it may be determined whether the termination condition is satisfied. The termination condition may be defined in any way. For example, the termination condition may be defined as when the next sample pair (i.e., unselected sample pair) does not exist in the training set, when more than a preset number of sample pairs are generated, when a preset time elapses, etc.

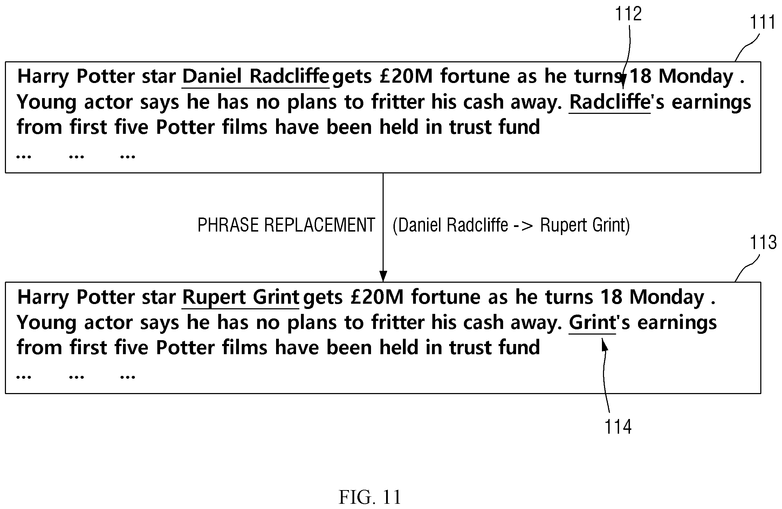

Meanwhile, the description has been made so far on the assumption that the first phrase (or second phrase) consists of one token (or word) or that the token units of the first phrase and the summary model are the same. However, in some cases, the first phrase (or second phrase) may consist of a plurality of words (see FIG. 11). In this case, the summary system 10 may calculate a prediction probability of the corresponding phrase based on a prediction probability for a first token of a first word (e.g., the prediction probability for the first token of the first word is used as a prediction probability of the corresponding token).

In addition, in some cases, both the first phrase and the second phrase selected from the first sample pair may consist of a plurality of words. In this case, the summary system 10 may perform phrase replacement by replacing a word in the first phrase with a word in the second phrase at the corresponding position. For example, as illustrated in FIG. 11, assume that there is a portion in which only a second word 112 of the first phrase appears in a summary 111 of the first sample pair. In this case, the summary system 10 may generate a summary 113 of the second sample pair by replacing the second word 112 of the first phrase with a word 114 (e.g., a second word) of the second phrase at the corresponding position.

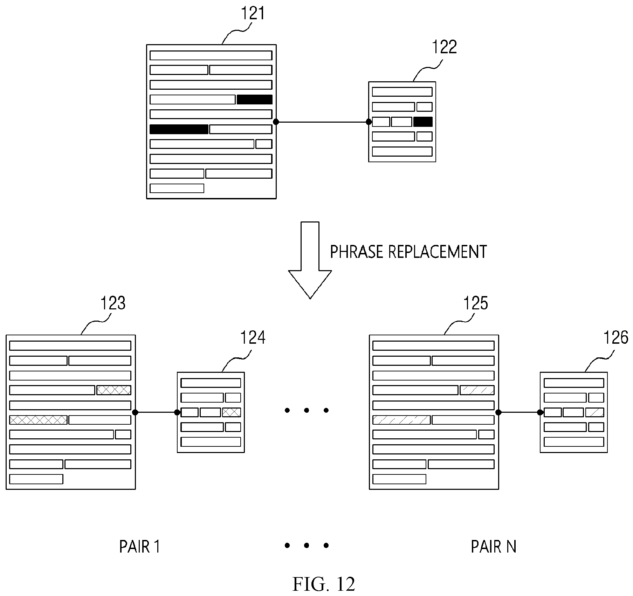

In addition, the description has been made as far as if one new (virtual) sample pair (i.e., second sample pair) is generated from one sample pair (i.e., first sample pair) belonging to the training set. However, in some cases, summary system 10 may generate a plurality of new sample pairs. For example, as illustrated in FIG. 12, the summary system 10 may generate a plurality of new sample pairs (see 123 to 126) by replacing first phrases selected in first sample pairs 121 and 122 with different phrases.

So far, the method for generating the summary according to some exemplary embodiments of the present disclosure has been described with reference to FIGS. 5 to 12. According to the above, the phrase that matches the knowledge of the summary model may be accurately selected among the common phrases that simultaneously appear in the original text and the summary of an existing sample pair (i.e., a first sample pair) by using the prediction probability of the summary model. In addition, by modifying the phrase selected in this way, the virtual sample pair (i.e., the second sample pair) that contradicts the knowledge of the summary model may be accurately generated. Furthermore, by training the summary model using the generated sample pair, the summary model with excellent factual adaptiveness may be easily constructed. Since such a summary model may generate a high-quality summary with high factual consistency regardless of the content of the original text, the practical application of generative summarization method may be greatly accelerated.

In addition, by using the prediction probability of the summary model, the phrase that contradicts the knowledge of the summary model may be accurately selected as the replacement phrase. Accordingly, the virtual sample pair (i.e., the second sample pair) that is effective in improving the factual adaptiveness of the summary model may be more easily generated.

In addition, by selecting the replacement phrase among the phrases in a given training set, the virtual sample pair (i.e., the second sample pair) with similar characteristics (or distribution) to the existing sample pair (i.e., the first sample pair) may be easily generated.

In addition, a high-quality virtual sample pair (i.e., a second sample pair) with a natural context may be easily generated by replacing the phrase of the existing sample pair (i.e. the first sample pair) with another phrase of the same phrase category.

Hereinafter, a method for generating a summary according to some other exemplary embodiments of the present disclosure will be described with reference to FIGS. 13 to 16.

FIG. 13 is an exemplary flowchart illustrating a method for generating a summary according to some other exemplary embodiments of the present disclosure. However, this is only a preferred exemplary embodiment for achieving the object of the present disclosure, and some steps may also be added or deleted as needed.

As illustrated in FIG. 13, the present exemplary embodiments relate to a method for further improving the performance of the summary model regarding factual consistency by further performing the contrastive learning task.

The present exemplary embodiment may also begin at step S131 of acquiring a training set including a plurality of sample pairs. For the present step, refer to the description of step S51 described above.

In step S132, the training set may be augmented by generating a new sample pair by modifying the phrases of the sample pairs based on the prediction probability of the summary model. For the present step, refer to the description of step S52 described above. The present step may also be omitted in some cases.

In step S133, a negative summary corresponding to the original text of the sample pair included in the augmented training set may be generated. As described above, the negative summary may refer to a summary that has lower factual consistency with the original text than the positive summary. A specific method of generating the negative summary in this step may vary depending on the exemplary embodiment.

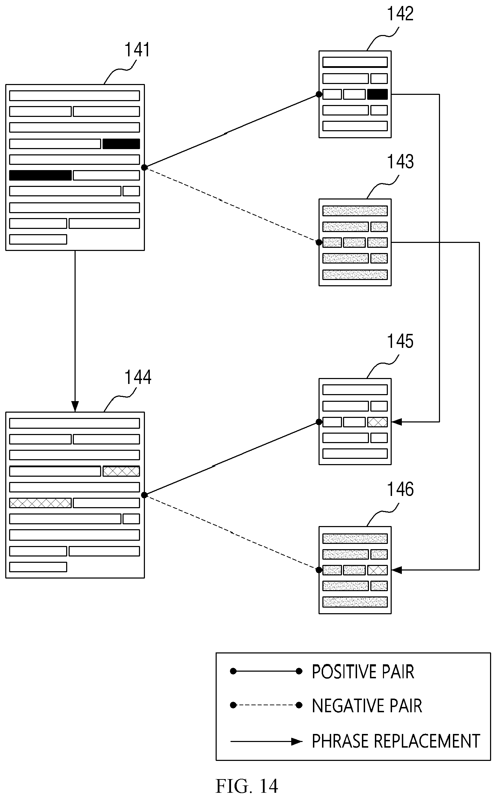

In some exemplary embodiments, a negative summary of a second sample pair may be generated using a previously prepared negative summary of the first sample pair. For example, as illustrated in FIG. 14, assume that the first sample pair consists of an original text 141, a positive summary 142, and a negative summary 143. In addition, assume that the summary system 10 generates an original text 144 and a positive summary 145 of the second sample pair by replacing a first phrase selected from the original text 141 and the positive summary 142 with a second phrase. In this case, the summary system 10 may generate a negative summary 146 of the second sample pair by replacing a specific phrase (e.g., a first phrase, a phrase of the same entity category as the first phrase, etc.) in the negative summary 143 of the first sample pair with the second phrase. In this way, a virtual negative summary 146 having similar quality to the previously prepared negative summary 143 may be easily generated.

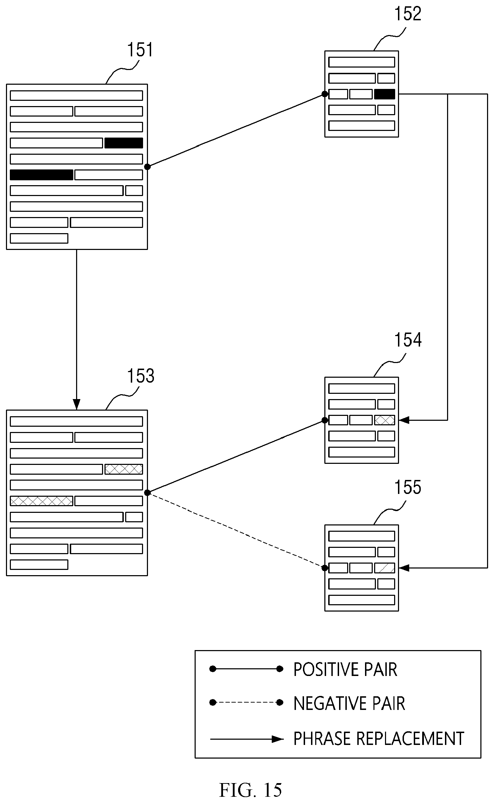

In some other exemplary embodiments, a negative summary of a specific sample pair may be generated using a positive summary of another sample pair. For example, as illustrated in FIG. 15, assume that the first sample pair consists of an original text 151 and a positive summary 152. In addition, assume that the summary system 10 generates an original text 153 and a positive summary 154 of the second sample pair by replacing a first phrase selected from the first sample pair 151 and 152 with a second phrase. In this case, the summary system 10 may generate an additional summary 155 by replacing the first phrase of the positive summary 152 of the first sample pair with a third phrase different from the second phrase, and may use the additional summary 155 as a negative summary of the second sample pair. In this way, a high-quality virtual negative summary 155 may be easily generated even when there is no previously prepared negative summary. For reference, the negative summary 155 may be a positive summary of another sample pair generated from the first sample pair 151 and 152.

In some still other exemplary embodiments, the negative summary may also be generated based on various combinations of the above-described exemplary embodiments.

Meanwhile, in some cases, the previously prepared first sample pair may consist of an original text, a reference summary, a positive summary, and a negative summary. In this case, the reference summary may correspond to an anchor sample for contrastive learning, and as described above, the reference summary may also be understood as the positive summary. In this case, the summary system 10 may generate a positive summary of the second sample pair from the positive summary of the first sample pair. Specifically, the summary system 10 may generate the positive summary of the second sample pair by replacing a first phrase with a second phrase in the positive summary of the first sample pair. The original text, reference summary, positive summary, and negative summary of the first sample pair and the second sample pair may be used in the contrastive learning task.

The description will be made with reference to FIG. 13 again.

In step S134, the summary model may be trained by performing the summary task and the contrastive learning task using the augmented training set. For example, the summary system 10 may calculate a likelihood-based first loss by performing a summary task using the positive sample pairs, calculate a second loss by performing the contrastive learning task using the positive summary and the negative summary, and may update weight parameters of the summary model 11 based on the first loss and the second loss.

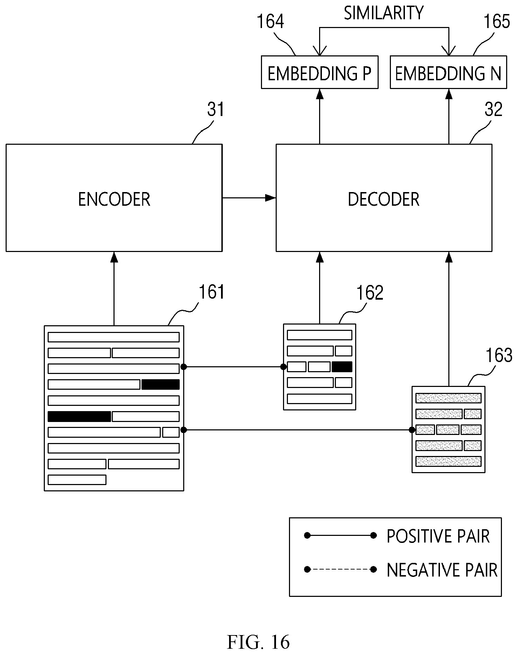

In order to provide more convenience of understanding, a process in which the contrastive learning task is performed will be further described with reference to FIG. 16.

As illustrated in FIG. 16, the summary system 10 may perform a contrastive learning task using specific sample pairs 161 to 163 of the augmented training set. As described above, the specific sample pairs 161 to 163 may consist of an original text 161, a positive summary 162, and a negative summary 163. In this case, the positive summary 162 may also refer to a reference summary, may also refer to a positive summary rather than the reference summary (that is, if there is an anchor sample and a positive sample, the positive summary 162 may refer to a summary corresponding to the positive sample), and may include a reference summary and a positive summary.

Specifically, the summary system 10 may generate a first representative embedding 164 (P) by inputting the original text 161 into the encoder 31 and the positive summary 162 into the decoder 32 (e.g., using a teacher-forcing technique). The first representative embedding 164 may be, for example, an average embedding of a plurality of token embeddings, a token embedding corresponding to a specific token (e.g., a special token), etc., but is not limited thereto. A method for generating representative embeddings 164 and 165 may vary.

Next, the summary system 10 may generate a second representative embedding 165 (N) by inputting the original text 161 into the encoder 31 and the negative summary 163 into the decoder 32 (e.g., using a teacher-forcing technique).

Next, the summary system 10 may calculate a loss (i.e., a second loss) according to the contrastive learning task based on a similarity between the first representative embedding 164 and the second representative embedding 165. For example, the second loss may be calculated to be a larger value as the similarity increases. The similarity between the representative embeddings 164 and 165 may be calculated based on, for example, a cosine similarity, but the scope of the present disclosure is not limited thereto.

In addition, although not clearly illustrated in FIG. 16, if the positive summary 162 includes a reference summary (hereinafter referred to as "first positive summary") and a second positive summary, the summary system 10 may calculate a similarity between a representative embedding based on the first positive summary and a representative embedding based on the second positive summary, and may train the summary model 11 by further using a loss according to the calculated similarity (e.g., the higher the loss similarity, the smaller the value is calculated).

The contrastive learning task described above may significantly improve the factual consistency of the summary model 11 by training the summary model 11 such that the original text (e.g., 161) maps closer to the positive summary (e.g., 162) and farther from the negative summary (e.g., 163).

So far, the method for generating the summary according to some other exemplary embodiments of the present disclosure has been described with reference to FIGS. 13 to 16. According to the above, by further performing the contrastive learning task, the factual adaptiveness and factual consistency of the summary model may be improved together.

Hereinafter, exemplary embodiments of a method for evaluating the factual adaptiveness of the trained summary model will be described with reference to FIGS. 17 and 18.

FIG. 17 is an exemplary diagram for describing a method for evaluating factual adaptiveness of a summary model according to some exemplary embodiments of the present disclosure. In the present exemplary embodiments, for clarity of description, a sample pair included in an evaluation set is named "third sample pair", and a virtual sample pair generated from the "third sample pair" is named "fourth sample pair".

As illustrated in FIG. 17, in the present exemplary embodiments, the summary system 10 may evaluate (measure) the factual adaptiveness of the trained summary model 11 based on a difference in prediction probabilities between a third sample pair 171 and 172 and a fourth sample pair 174 and 175.

Specifically, the summary system 10 may generate the fourth sample pair 174 and 175 by selecting a third phrase 173 (e.g., "B" may refer to a first token of a third phrase) from the common phrases of the third sample pair 171 and 172 and replacing the third phrase 173 with a fourth phrase 176 (e.g., "D" may refer to a first token of the fourth phrase). For this, refer to the descriptions of FIGS. 6 to 12.

Next, the summary system 10 may calculate a prediction probability 177 for the third phrase by inputting the original text 171 of the third sample pair into the encoder 31 of the summary model 11 and inputting a text of the summary 172 positioned before the third phrase 173 into the decoder 32.

Next, the summary system 10 may also calculate a prediction probability 178 for the fourth phrase 176 in a similar manner.

Next, the summary system 10 may evaluate the factual adaptiveness of the summary model 11 based on the difference between the two prediction probabilities 177 and 178. For example, the summary system 10 may evaluate that the factual adaptiveness of the summary model 11 is better as the difference between the two prediction probabilities 177 and 178 is smaller. This is because the small difference between the two prediction probabilities 177 and 178 means that factual consistency is well maintained for the different original texts 171 and 174. For example, the small difference between the two prediction probabilities 177 and 178 may mean that the summary model 11 performed factually consistent inference even for the fourth phrase 176 that contradicts the knowledge of the summary model 11.

For reference, in FIG. 17, "φ" refers to the trained summary model 11. For example, if "Ψ" refers to a pretrained summary model 11, "φ" may be understood to mean a summary model 11 (e.g., fine-tuned model) additionally trained according to the method illustrated in FIG. 6 or 13.

Hereinafter, a method for evaluating factual adaptiveness of a summary model according to some other exemplary embodiments of the present disclosure will be described with reference to FIG. 18.

In the present exemplary embodiments, the summary system 10 may evaluate the factual adaptiveness of the trained summary model 11 based on a difference in factual consistency of summaries 185 and 186 generated from different original texts 181 and 183.

Specifically, the summary system 10 may generate a second original text 183 by replacing a first phrase 182 of a first original text 181 with a second phrase 184. For example, the summary system 10 may generate the second original text 183 by selecting the phrases 182 and 184 according to the method described with reference to FIGS. 6 to 12. However, in some cases, the first phrase 182 may also be selected from phrases that are not common phrases.

Next, the summary system 10 may generate summaries 185 and 186 for each of the original texts 181 and 183 through the trained summary model 11. For example, the summary system 10 may generate a first summary 185 by inputting the first original text 181 into the encoder 31 of the summary model 11 and repeating the decoding step in an auto-regressive manner. In addition, the summary system 10 may also generate a second summary 186 in a similar manner.

Next, the summary system 10 may calculate a first consistency score FC1 between the first original text 181 and the first summary 185 and calculate a second consistency score FC2 between the second original text 183 and the second summary 186, using a predefined evaluation function f_{FC}. Here, the evaluation function f_{FC} is a function that evaluates the factual consistency between the original text and the summary and may be defined in any way. For example, the evaluation function may be defined to evaluate the factual consistency between the original text and the summary based on the match/mismatch of phrases, number, etc., but the scope of the present disclosure is not limited thereto.

Next, the summary system 10 may evaluate the factual adaptiveness of the summary model 11 based on a difference between the two consistency scores FC1 and FC2. For example, the summary system 10 may evaluate that the factual adaptiveness of the summary model 11 is better as the difference between the two consistency scores FC1 and FC2 is smaller.

So far, the exemplary embodiments of the method for evaluating the factual adaptiveness of the summary model have been described with reference to FIGS. 17 and 18. According to the above, by using metrics that matches well the concept of the factual adaptiveness, the factual adaptiveness of the trained summary model may be accurately evaluated.

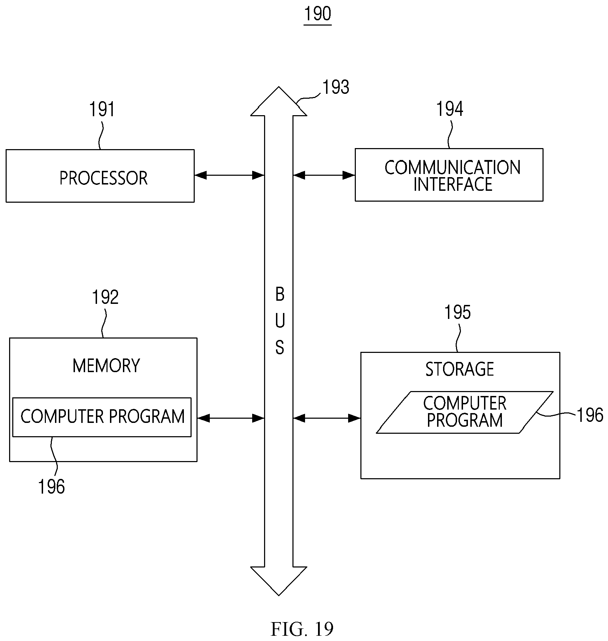

Hereinafter, an exemplary computing device 190 capable of implementing the summary system 10 described above will be described with reference to FIG. 19.

FIG. 19 is an exemplary hardware configuration diagram illustrating the computing device 190.

As illustrated in FIG. 19, a computing device 190 may include one or more processors 191, a bus 193, a communication interface 194, a memory 192 for loading a computer program 196 executed by the processor 191, and a storage 195 for storing the computer program 196. However, only the components related to the exemplary embodiments of the present disclosure are illustrated in FIG. 19. Therefore, those skilled in the art to which the present disclosure belongs may know that other general-purpose components may be further included in addition to the components illustrated in FIG. 19. That is, the computing device 190 may further include various components other than the components illustrated in FIG. 19. In addition, in some cases, the computing device 190 may also be configured in a form in which some of the components illustrated in FIG. 19 are omitted. Hereinafter, each component of the computing device 190 will be described.

The processor 191 may control an overall operation of each component of the computing device 190. The processor 191 may be configured to include at least one of a central processing unit (CPU), a micro processor unit (MPU), a micro controller unit (MCU), a graphic processing unit (GPU), or any type of processor well known in the art. In addition, the processor 191 may perform a calculation on at least one application or program for executing the operations/methods according to the exemplary embodiments of the present disclosure. The computing device 190 may include one or more processors.

Next, the memory 192 stores various data, commands, and/or information. The memory 192 may load the computer program 196 from the storage 195to execute the operations/methods according to the exemplary embodiments of the present disclosure. The memory 192 may be implemented as a volatile memory such as RAM, but the technical scope of the present disclosure is not limited thereto.

Next, the bus 193 may provide a communications function between the components of the computing device 190. The bus 193 may be implemented as various types of buses, such as an address bus, a data bus, and a control bus.

Next, the communication interface 194 supports wired/wireless Internet communications of the computing device 190. In addition, the communication interface 194 may also support various communication methods other than Internet communications. To this end, the communication interface 194 may include a communication module well known in the art of the present disclosure.

Next, the storage 195 may non-temporarily store one or more computer programs 196. The storage 195 may include a non-volatile memory such as a read only memory (ROM), an erasable programmable ROM (EPROM), an electrically erasable programmable ROM (EEPROM), a flash memory, or the like, a hard disk, a removable disk, or any form of computer-readable recording medium well known in the art to which the present disclosure pertains.

Next, the computer program 196 may include one or more instructions that when loaded into memory 192, cause the processor 191 to perform the operations/methods according to various exemplary embodiments of the present disclosure. That is, the processor 191 may perform the operations/methods according to various exemplary embodiments of the present disclosure by executing the one or more loaded instructions.

For example, the computer program 196 may include instructions that causes to be performed, an operation of acquiring a first sample pair, an operation of extracting common phrases that appear simultaneously in an original text and a summary of the first sample pair, an operation of selecting a first phrase among the common phrases based on a prediction probability of a summary model for the common phrases, an operation of generating a second sample pair by modifying the first phrase in the original text and the summary of the first sample pair, and an operation of updating the summary model by performing a summary task using the second sample pair. In this case, the summary system 10 according to some exemplary embodiments of the present disclosure may be implemented through the computing device 190.

As another example, the computer program 196 may include instructions that cause at least some of the operations of the exemplary embodiments described with reference to FIGS. 1 to 18 to be performed. Even in this case, the summary system 10 according to some exemplary embodiments of the present disclosure may be implemented through the computing device 190.

Meanwhile, in some exemplary embodiments, the computing device 190 illustrated in FIG. 19 may also refer to a virtual machine implemented based on cloud technology. For example, the computing device 190 may be a virtual machine operating on one or more physical servers included in a server farm. In this case, at least some of the processor 191, the memory 192, and the storage 195 illustrated in FIG. 19 may be virtual hardware, and the communication interface 194 may also be implemented as a virtualized networking element such as a virtual switch.

So far, the exemplary computing device 190 capable of implementing the summary system 10 according to some exemplary embodiments of the present disclosure has been described with reference to FIG. 19.

Embodiments of the present disclosure have been described above with reference to FIGS. 1 through 19, but it should be noted that the effects of the present disclosure are not limited to those described above, and other effects of the present disclosure should be apparent from the following description.

The technical features of the present disclosure described so far may be embodied as computer readable codes on a computer readable medium. The computer program recorded on the computer readable medium may be transmitted to other computing device via a network such as internet and installed in the other computing device, thereby being used in the other computing device.

Although operations are shown in a specific order in the drawings, it should not be understood that desired results may be obtained when the operations must be performed in the specific order or sequential order or when all of the operations must be performed. In certain situations, multitasking and parallel processing may be advantageous. In concluding the detailed description, those skilled in the art will appreciate that many variations and modifications may be made to the example embodiments without substantially departing from the principles of the present disclosure. Therefore, the disclosed example embodiments of the disclosure are used in a generic and descriptive sense only and not for purposes of limitation.

The protection scope of the present invention should be interpreted by the following claims, and all technical ideas within the equivalent range should be interpreted as being included in the scope of the technical ideas defined by the present disclosure.

## Claims

1. A method for generating a summary performed by at least one computing device, the method comprising:
acquiring a first sample pair, the first sample pair including an original text and a summary corresponding to the original text;
extracting a common phrase that appears simultaneously in the original text and the summary of the first sample pair;
selecting a first phrase among common phrases based on a prediction probability of a summary model for the common phrases;
generating a second sample pair by modifying the first phrase in the original text and the summary of the first sample pair; and
updating the summary model by performing a summary task using the second sample pair.

2. The method of claim 1, wherein the summary model is a pretrained model.

3. The method of claim 1, wherein when the common phrase includes a plurality of tokens, the prediction probability for the common phrase is obtained based on a prediction probability of the summary model for a first token among the plurality of tokens.

4. The method of claim 1, wherein the selecting of the first phrase includes:
extracting a text positioned before a specific common phrase from the summary of the first sample pair;
obtaining a prediction probability for the specific common phrase by inputting the extracted text into the summary model without inputting the original text of the first sample pair into the summary model; and
selecting the specific common phrase as the first phrase based on a determination that the obtained prediction probability is greater than or equal to a reference value.

5. The method of claim 4, wherein the obtaining of the prediction probability for the specific common phrase includes inputting an empty text instead of the original text of the first sample pair.

6. The method of claim 1, wherein the selecting of the first phrase includes:
extracting a text positioned before a specific common phrase from the summary of the first sample pair;
obtaining a first prediction probability for the specific common phrase by inputting the original text of the first sample pair and the extracted text into the summary model;
replacing the specific common phrase with another phrase in the original text of the first sample pair and obtaining a second prediction probability of the summary model for the another phrase using the replaced original text; and
selecting the specific common phrase as the first phrase based on a determination that a difference between the first prediction probability and the second prediction probability is greater than or equal to a reference value.

7. The method of claim 1, wherein the first phrase is an entity, and
the generating of the second sample pair includes replacing the first phrase with a second phrase belonging to a same entity category as the first phrase, the second phrase being different from the first phrase.

8. The method of claim 7, wherein the first sample pair is selected from a plurality of sample pairs included in a previously prepared training set, and
the second phrase is selected from entities extracted from the plurality of sample pairs.

9. The method of claim 7, wherein the replacing of the first phrase with the second phrase includes replacing a word in the first phrase with a word in the second phrase at a corresponding position, when both the first phrase and the second phrase include a plurality of words.

10. The method of claim 1, wherein the generating of the second sample pair includes:
extracting a text positioned before the first phrase from the summary of the first sample pair;
obtaining a prediction probability for each of a plurality of predefined phrases by inputting the original text of the first sample pair and the extracted text into the summary model;
selecting a second phrase different from the first phrase among the plurality of predefined phrases based on the obtained prediction probability; and
replacing the first phrase with the second phrase.

11. The method of claim 10, wherein the second phrase is selected among phrases whose obtained prediction probability is less than a reference value.

12. The method of claim 10, wherein the second phrase is randomly selected from phrases whose obtained prediction probability is within a certain range.

13. The method of claim 10, wherein the selecting of the second phrase includes selecting the second phrase among remaining phrases, excluding phrases with the prediction probability in the top K% (where K is a real number between 0 and 50) among the plurality of predefined phrases.

14. The method of claim 1, further comprising:
acquiring a negative summary of an original text of a specific sample pair among the first sample pair and the second sample pair, the summary of the first sample pair and the summary of the second sample pair being positive summaries; and
additionally updating the summary model by performing a contrastive learning task using the original text of the specific sample pair, a positive summary of the specific sample pair, and the negative summary.

15. The method of claim 14, wherein the specific sample pair is the second sample pair,
the second sample pair is generated by replacing the first phrase with a second phrase different from the first phrase, and
the acquiring of the negative summary includes generating a negative summary of the second sample pair by replacing the first phrase included in the negative summary of the first sample pair with the second phrase.

16. The method of claim 14, wherein the specific sample pair is the second sample pair,
the second sample pair is generated by replacing the first phrase with a second phrase different from the first phrase, and
the acquiring of the negative summary includes generating a negative summary of the second sample pair by replacing the first phrase in the summary of the first sample pair with a third phrase different from the second phrase.

17. The method of claim 14, wherein the specific sample pair is the second sample pair,
the positive summary of the first sample pair includes a first positive summary that is a reference summary and a second positive summary that is not the reference summary, and
the positive summary of the second sample pair includes a summary generated by replacing the first phrase in the second positive summary with a second phrase that is different from the first phrase.

18. The method of claim 1, further comprising:
acquiring a third sample pair, the third sample pair including an original text and a summary corresponding to the original text;
generating a fourth sample pair by replacing a third phrase that appears simultaneously in the original text and the summary of the third sample pair with a fourth phrase;
extracting a first text positioned before the third phrase from the summary of the third sample pair and extracting a second text positioned before the fourth phrase from a summary of the fourth sample pair;
obtaining a prediction probability for the third phrase by inputting the original text of the third sample pair and the first text into the updated summary model;
obtaining a prediction probability for the fourth phrase by inputting an original text of the fourth sample pair and the second text into the updated summary model; and
evaluating a performance of the updated summary model based on a difference between the prediction probability for the third phrase and the prediction probability for the fourth phrase.

19. The method of claim 1, further comprising:
acquiring a first original text;
generating a second original text by modifying a phrase included in the first original text;
generating a first summary for the first original text and generating a second summary for the second original text through the updated summary model;
obtaining a first consistency score between the first original text and the first summary using a function that evaluates factual consistency between an original text and a summary;
obtaining a second consistency score between the second original text and the second summary using the function; and
evaluating a performance of the updated summary model based on a difference between the first consistency score and the second consistency score.

20. A system for generating a summary, the system comprising:
one or more processors; and
a memory that stores a computer program executed by the one or more processors,
wherein the computer program includes instructions that cause to be performed:
an operation of acquiring a first sample pair, the first sample pair including an original text and a summary corresponding to the original text;
an operation of extracting a common phrase that appears simultaneously in the original text and the summary of the first sample pair;
an operation of selecting a first phrase among common phrases based on a prediction probability of a summary model for the common phrases;
an operation of generating a second sample pair by modifying the first phrase in the original text and the summary of the first sample pair; and
an operation of updating the summary model by performing a summary task using the second sample pair.
